# FASCICULE DE BREVET EUROPEEN

(11) **EP 2 909 729 B1**
(45) Date de publication et mention de la délivrance du brevet: **14.08.2019**
(21) Numéro de dépôt: 13785528.4
(22) Date de dépôt: 08.10.2013
(51) Int. Cl.: G06F 13/24, G06F 9/48

(54) **PROCÉDÉ ET DISPOSITIF DE TRAITEMENT D'INTERRUPTIONS DANS UN SYSTÈME MULTIPROCESSEUR**
VERFAHREN UND VORRICHTUNG ZUR VERARBEITUNG VON UNTERBRECHUNGEN IN EINEM MULTIPROZESSORSYSTEM
METHOD AND DEVICE FOR PROCESSING INTERRUPTIONS IN A MULTIPROCESSOR SYSTEM

(30) Priorité: 16.10.2012 FR 1259859
(43) Date de publication de la demande: 26.08.2015
(73) Titulaire: Bull SAS, 78340 Les Clayes-sous-Bois (FR)
(72) Inventeur: MENYHART, Zoltan, F-38100 Grenoble (FR); TEMPORELLI, Frédéric, F-38130 Echirolles (FR); JEAUGEY, Sylvain, F-38240 Meylan (FR)
(74) Mandataire: Santarelli
(86) Numéro de dépôt international: PCT/FR2013/052398
(87) Numéro de publication internationale: WO 2014/060679

(56) Documents cités:
- EP-A2- 2 239 662
- US-A- 5 619 705
- US-A1- 2006 085 582
- US-A1- 2009 070 551
- US-A1- 2010 095 039
- US-A1- 2010 191 885
- US-A1- 2011 087 814

## Description

La présente invention concerne la gestion des processus dans les systèmes de traitement de l'information et plus particulièrement un procédé et un dispositif de traitement d'interruptions dans un système informatique multiprocesseur.

Les systèmes informatiques modernes sont généralement équipés de contrôleurs de périphériques dits autonomes, c'est-à-dire que les processeurs ne font que formuler des demandes pour des opérations d'entrée/sortie et les contrôleurs des périphériques exécutent ces opérations sans que les processeurs n'aient à intervenir. Lorsqu'une opération est terminée, le contrôleur de périphériques concerné le signal au processeur via une interruption.

Il est rappelé ici qu'une interruption est un événement entraînant l'arrêt temporaire de l'exécution normale d'un processus par un processeur afin d'exécuter un autre programme appelé routine d'interruption. Une interruption peut être matérielle ou logicielle.

Pour améliorer leurs performances, les systèmes informatiques modernes comprennent plusieurs processeurs, parfois des centaines de processeurs. Selon l'architecture mise en oeuvre, une application peut être décomposée en tâches élémentaires, ou processus, chacune traitée par un processeur ou plusieurs applications peuvent être exécutées en parallèle, chacune sur un ou plusieurs processeurs. Il s'agit de systèmes informatiques multiprocesseurs. Une mémoire locale est généralement associée à chaque processeur pour optimiser l'accès aux données traitées.

Les processus mis en oeuvre dans les systèmes informatiques multiprocesseurs sont souvent répartis de telle sorte que chaque processus soit localisé dans un processeur particulier afin que ce soit le même processeur qui exploite un sous-ensemble de données (traitées par un processus particulier) et que ce soit une même mémoire qui héberge ces données.

Lorsqu'un processus est migré, c'est-à-dire qu'il est déplacé d'un processeur vers un autre, les performances du système en sont affectées car il est nécessaire de déplacer le contexte d'exécution du processus. En outre, après migration, le processus sera, en lui-même, moins performant du fait qu'il devra utiliser des données stockées dans une zone mémoire distante (mémoire locale du processeur initial).

Par ailleurs, dans les systèmes informatiques modernes, les interruptions générées par un contrôleur de périphériques autonome sont transmises sous forme de messages aux processeurs qui sont à l'origine des opérations d'entrée/sortie. Cependant, lorsqu'un contrôleur de périphériques autonome est utilisé par plusieurs processeurs, ce n'est pas toujours le processeur à l'origine d'une opération d'entrée/sortie qui reçoit l'interruption correspondante.

Lorsqu'une interruption n'est pas reçue par le processeur qui a initié l'opération d'entrée/sortie correspondante, un traitement supplémentaire est nécessaire. Ce traitement peut notamment consister en la transmission d'une interruption au processeur qui a réellement initié l'opération d'entrée/sortie en cause. A ces fins, un mécanisme d'interruption inter-processeur (appelé IPI ou *Inter-Processor Interrupt* en terminologie anglo-saxonne). Alternativement, ce traitement peut consister à transférer le processus ayant appelé les fonctions d'entrée/sortie au processeur ayant reçu l'interruption.

La demande de brevet US 2006/0085582 décrit un système multiprocesseur dans lequel une unité de traitement qui est la source d'une notification d'interruption transmet la notification à une unité de traitement destinataire, la notification comprenant un identifiant du destinataire. Un contrôleur analyse la notification, se réfère à une table de correspondance entre des identifiants des processus et des processeurs qui effectuent les processus, détermine la destinataire et lui transmet la notification d'interruption.

Quel que soit le traitement mis en oeuvre, il a une influence non négligeable sur les performances du système informatique.

Il existe donc un besoin pour améliorer les performances du traitement des interruptions dans les systèmes informatiques multiprocesseurs utilisant des contrôleurs de périphériques autonomes partagés.

L'invention permet de résoudre au moins un des problèmes exposés précédemment.

L'invention a ainsi pour objet un procédé de traitement d'interruptions dans un contrôleur de périphériques autonome pour système informatique multiprocesseur, ce procédé comprenant les étapes suivantes,
- réception d'une commande pour l'exécution d'une opération d'entrée/sortie et d'un identifiant du dispositif duquel est reçue ladite commande ;
- exécution d'une opération d'entrée/sortie liée à ladite commande reçue ;
- obtention dudit identifiant du dispositif duquel est reçue ladite commande ;
- identification d'un destinataire d'une interruption correspondant à l'exécution de ladite opération d'entrée/sortie liée à ladite commande reçue, ledit destinataire étant identifié en fonction dudit identifiant obtenu du dispositif duquel est reçue ladite commande ; et
- transmission audit destinataire identifié de ladite interruption correspondant à l'exécution de ladite opération d'entrée/sortie liée à ladite commande reçue.

Le procédé selon l'invention permet ainsi d'optimiser les performances d'un système informatique multiprocesseur en évitant notamment la mise en oeuvre d'un mécanisme d'interruption inter-processeur et/ou une migration de processus.

Selon un mode de réalisation particulier, le procédé comprend en outre une étape de mémorisation dudit identifiant du dispositif duquel est reçue ladite commande. Une telle étape permet de retrouver facilement un dispositif auquel doit être adressé une interruption.

Toujours selon un mode de réalisation particulier, le procédé comprend en outre une étape de transmission dudit identifiant du dispositif duquel est reçue ladite commande, ladite étape d'obtention dudit identifiant du dispositif duquel est reçue ladite commande comprenant une étape de réception dudit identifiant transmis. Une telle étape permet de conserver un lien direct entre une commande ou son exécution et un identifiant du dispositif duquel est reçue cette commande, facilitant l'identification du destinataire d'une interruption.

Toujours selon un mode de réalisation particulier, ladite étape d'identification d'un destinataire comprend une étape d'accès à une table de messages d'interruptions.

Toujours selon un mode de réalisation particulier, ledit destinataire est identifié en fonction d'un numéro de vecteur d'interruption.

Toujours selon un mode de réalisation particulier, ladite table de messages d'interruptions comprend au moins un identifiant de destinataire d'une interruption, ledit au moins un identifiant de destinataire étant associé à un couple comprenant un numéro de vecteur d'interruption et un identifiant d'un dispositif duquel peut être reçue une commande pour l'exécution d'une opération d'entrée/sortie.

Ladite table de messages d'interruptions est, par exemple, une table de messages de type MSI-X modifiée.

L'invention a également pour objet un programme d'ordinateur comprenant des instructions adaptées à la mise en oeuvre de chacune des étapes du procédé décrit précédemment lorsque ledit programme est exécuté sur un ordinateur ainsi qu'un contrôleur de périphériques autonome comprenant des moyens adaptés à la mise en oeuvre de chacune des étapes du procédé décrit précédemment et un système informatique comprenant un tel contrôleur de périphériques autonome, une pluralité de processeurs et une pluralité de périphériques, ledit contrôleur de périphériques autonome permettant à chaque processeur de ladite pluralité de processeurs d'accéder à chaque périphérique de ladite pluralité de périphériques.

Les avantages procurés par ce programme d'ordinateur, ce contrôleur de périphériques autonome et ce système informatique sont similaires à ceux évoqués précédemment.

D'autres avantages, buts et caractéristiques de la présente invention ressortent de la description détaillée qui suit, faite à titre d'exemple non limitatif, au regard des dessins annexés dans lesquels :
- la figure 1 représente schématiquement une partie d'un système informatique multiprocesseur dans lequel l'invention peut être mise en oeuvre ;
- la figure 2 illustre un exemple d'une table de messages MSI-X standard pour gérer des interruptions ;
- la figure 3 illustre un exemple d'une table de messages MSI-X modifiée pour gérer des interruptions selon un tel mode de réalisation particulier ;
- la figure 4 illustre certaines étapes d'un exemple d'algorithme mis en oeuvre dans un contrôleur de périphériques autonome conformément au mode de réalisation décrit en référence à la figure 3 ; et
- la figure 5 illustre schématiquement un exemple d'architecture d'un contrôleur de périphériques autonome adapté à mettre en oeuvre un mode de réalisation de l'invention, notamment l'algorithme décrit en référence à la figure 4.

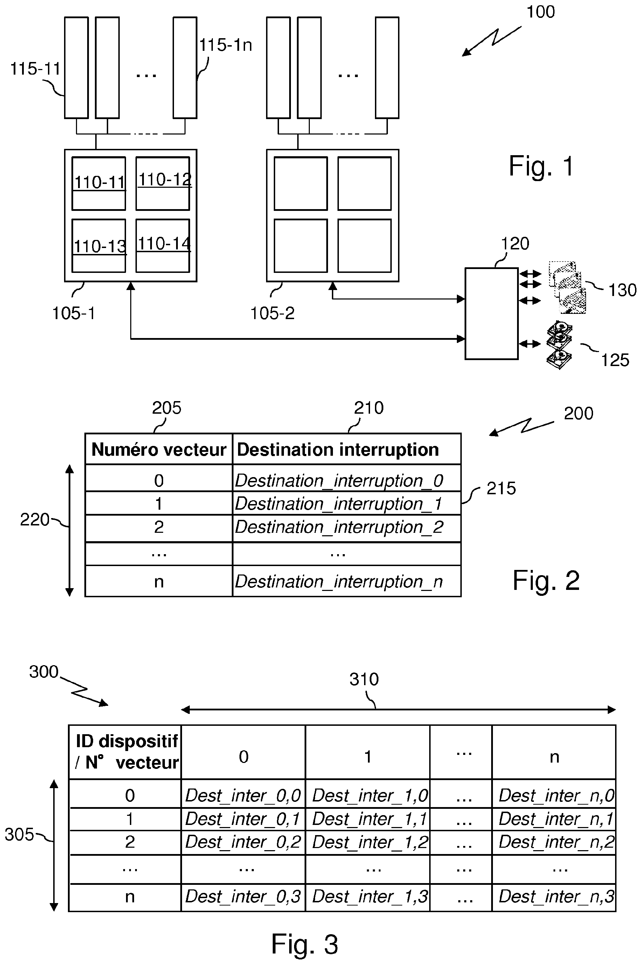

La figure 1 représente schématiquement une partie 100 d'un système informatique multiprocesseur dans lequel l'invention peut être mise en oeuvre.

Comme illustré, le système informatique 100 comprend ici deux processeurs 105-1 et 105-2, par exemple des processeurs multi-coeurs. A titre d'illustration, le processeur 105-1 comprend quatre coeurs référencés 110-11 à 110-14.

Une mémoire locale, typiquement une mémoire de type RAM (sigle de *Random Access Memory* en terminologie anglo-saxonne), est associée à chaque processeur qui peut y lire et y écrire des données via un bus de données. Ainsi, une mémoire locale comprenant ici les modules 115-11 à 115-1n est associée au processeur 105-1.

Le système informatique 100 comprend en outre un contrôleur de périphériques autonome 120 relié à plusieurs processeurs, ici aux processeurs 105-1 et 105-2 via un bus de communication. Le contrôleur de périphériques autonome 120 est également relié à des périphériques tels que des disques durs 125 ou d'autres périphériques 130 tels que des cartes réseaux, par exemple des cartes conformes au standard *Infiniband* (*Infiniband* est une marque).

Selon un mode de réalisation particulier, les commandes visant des opérations d'entrée/sortie, émises par des processeurs reliés à un même contrôleur de périphériques autonome, comprennent une identification du processeur ayant initié la commande. Une telle identification est mémorisée par le contrôleur de périphériques autonome. Ainsi, après exécution d'une opération d'entrée/sortie, le contrôleur de périphériques autonome peut identifier le processeur ayant initié cette opération et lui adresser directement une interruption.

Ce mode de réalisation comprend donc deux parties :
- l'ajout, à chaque commande d'entrée/sortie, d'une identification propre à l'initiateur de la commande. A ces fins, les blocs de commandes des opérations d'entrée/sortie sont, de préférence, étendus pour intégrer une identification du processeur à l'origine de la demande ; et
- l'obtention de l'identification d'un processeur ayant initié une opération d'entrée/sortie après l'exécution de cette dernière pour lui transmettre une interruption.

Un tel mode de réalisation peut être mis en oeuvre dans un système informatique multiprocesseur dans lequel des périphériques sont connectés à un contrôleur de périphériques autonome via un bus de communication connu sous le nom de PCIe (sigle de *Peripheral Component Interconnect express* en terminologie anglo-saxonne). Il permet notamment l'échange de messages d'interruption de type MSI (sigle *de Message Signaled Interrupts* en terminologie anglo-saxonne) et MSI-X (sigle de *Message Signaled Interrupts* - *eXtended* en terminologie anglo-saxonne).

Il est rappelé ici que selon le standard PCIe, les interruptions sont transmises sous forme de messages via un bus de données, sans utiliser de signaux dédiés. Les messages MSI-X sont des messages d'interruption d'entrée/sortie qui peuvent être transmis à plusieurs processeurs. Le principe général consiste à écrire une donnée particulière, de taille limitée, à une adresse prédéterminée. Lorsqu'une interruption doit être émise, sa référence est utilisée pour identifier le destinataire. Par conséquent, comme décrit précédemment, pour une interruption particulière, par exemple la réception d'une donnée par un périphérique, il peut y avoir plusieurs destinataires, typiquement plusieurs processeurs.

En d'autres termes, le standard PCIe utilise un tableau d'interruptions indexé par des numéros de vecteur correspondant à des types d'événements détectés au niveau du matériel du système informatique multiprocesseur. A titre d'illustration, ces types d'événements matériels peuvent être les suivants :
- la fin normale d'une opération de lecture de données sur un périphérique tel qu'un disque dur ; et
- la réception d'une donnée par un périphérique tel qu'une carte réseau.

Lorsqu'une interruption doit être signalée, sa destination est identifiée à l'aide d'une table de messages MSI-X en fonction d'un numéro de vecteur.

La figure 2 illustre un exemple d'une table de messages MSI-X standard pour gérer des interruptions.

Comme illustré, la table 200 de messages MSI-X comprend, de façon standard et sous une forme simplifiée, deux colonnes 205 et 210 représentant un numéro de vecteur d'interruption, c'est-à-dire un type d'événement particulier, et une destination d'interruption correspondante, respectivement. Ainsi, par exemple, la ligne 215 correspond au vecteur d'interruption ayant la référence 1, dont la destination d'interruption est *Destination_interruption_1*. A titre d'illustration, l'interruption visée à la ligne 215 peut concerner la réception d'une donnée par une carte réseau et la transmission de l'interruption correspondante aux processeurs du système informatique concerné.

Ainsi, comme illustré par la flèche 220, l'identification d'une destination d'une interruption est déterminée en fonction d'un numéro de vecteur, c'est-à-dire d'un type d'événement matériel.

Selon un mode de réalisation particulier, une seconde dimension est ajoutée à la table de messages MSI-X pour choisir une destination d'une interruption non pas uniquement en fonction d'un numéro de vecteur mais également en fonction d'un identifiant du dispositif, typiquement un processeur, à l'origine de la commande ayant conduit à l'événement matériel correspondant à l'interruption à signaler.

La figure 3 illustre un exemple d'une table de messages MSI-X modifiée pour gérer des interruptions selon un tel mode de réalisation particulier.

Comme illustré, chaque ligne de la table 300 de messages MSI-X modifiée correspond à un numéro de vecteur, c'est-à-dire un type d'événement particulier, et chaque colonne correspond à un identifiant d'un dispositif, typiquement un processeur, pouvant être à l'origine d'une commande conduisant à un événement matériel correspondant à une interruption à signaler.

Ainsi, à partir d'un numéro de vecteur et d'un identifiant d'un dispositif à l'origine de la commande ayant conduit à l'événement matériel correspondant à l'interruption à signaler, il est possible de déterminer une destination de l'interruption, cette destination étant, par nature, plus précise que celle obtenue uniquement à partir d'un numéro de vecteur.

A titre d'illustration, si le numéro de vecteur est le 2 et si l'identifiant du dispositif à l'origine de la commande ayant conduit à l'événement matériel correspondant à l'interruption à signaler est 1, la destination de l'interruption est *Dest_inter_1,2*.

Comme illustré par les flèches 305 et 310, l'identification d'une destination d'une interruption est déterminée en fonction d'un numéro de vecteur, c'est-à-dire d'un type d'événement, et d'un identifiant d'un dispositif, typiquement un processeur, pouvant être à l'origine d'une commande conduisant à un événement matériel correspondant à une interruption à signaler.

En d'autres termes, un identifiant d'un dispositif pouvant être à l'origine d'une commande conduisant à un événement matériel correspondant à une interruption à signaler, ce dispositif traitant l'interruption reçue, est utilisé, selon ce mode de réalisation, pour ajouter une seconde dimension à la table de messages MSI-X et affiner la destination de l'interruption.

Une interruption peut alors être acheminée plus rapidement au dispositif, typiquement au processeur, qui traite l'opération d'entrée/sortie à l'origine de l'interruption. Le traitement est ainsi plus rapide et perturbe moins les traitements effectués par les autres dispositifs du système informatique.

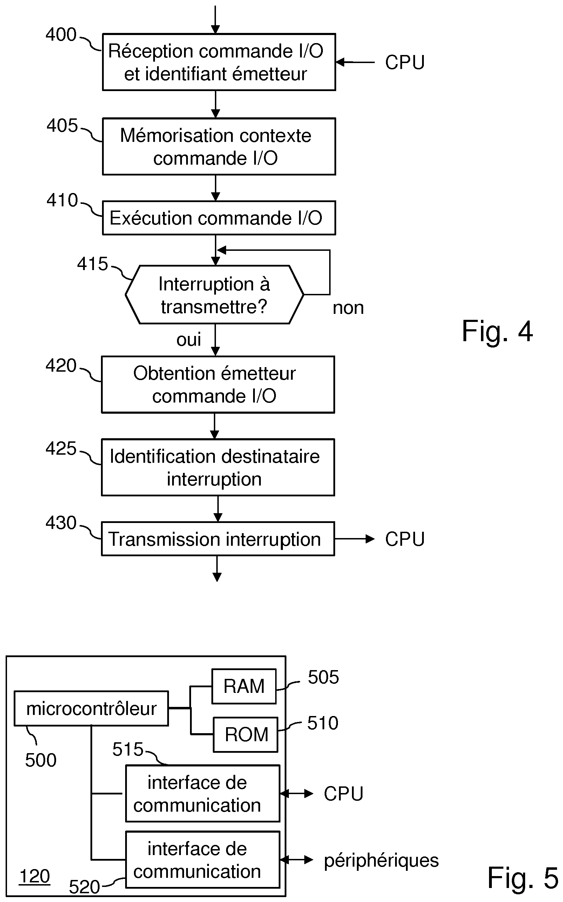

La figure 4 illustre certaines étapes d'un exemple d'algorithme mis en oeuvre dans un contrôleur de périphériques autonome conformément au mode de réalisation décrit en référence à la figure 3.

Une première étape (étape 400) a pour objet la réception d'une commande d'une opération d'entrée/sortie (notée I/O pour *Input*/*Output* en terminologie anglo-saxonne) et d'un identifiant du dispositif, typiquement un processeur noté CPU (sigle de *Central Processing Unit* en terminologie anglo-saxonne), duquel est reçue la commande. La commande et l'identifiant peuvent être reçues de façon distincte ou conjointe (l'identifiant peut, par exemple, être codé dans la commande).

Le contexte de la commande reçue est alors mémorisé (étape 405), de façon locale ou distante.

La mémorisation du contexte a pour objet de permettre de retrouver l'identifiant du dispositif duquel est reçue une commande lorsque cette dernière est exécutée et qu'il convient de transmettre une interruption. Le contexte comprend, de préférence, l'identifiant du dispositif duquel est reçue la commande ainsi que la commande ou une partie de la commande, un lien sur la commande ou une partie de la commande ou une référence sur la commande ou une partie de la commande.

La mémorisation locale du contexte peut, par exemple, comprendre le stockage de la commande et celle de l'identifiant du dispositif duquel est reçue la commande dans une mémoire locale. La mémorisation distante peut comprendre, par exemple, le stockage de la commande et celle de l'identifiant du dispositif duquel est reçue la commande dans une mémoire distante. Alternativement, ou de façon complémentaire, la mémorisation distante peut comprendre la transmission de l'identifiant du dispositif duquel est reçue la commande avec une des données et/ou paramètres d'exécution de la commande (la transmission de l'identifiant d'élément en élément permet de conserver cet identifiant et donc de le mémoriser).

L'opération d'entrée/sortie correspondant à la commande reçue est ensuite exécutée (étape 410).

Un test est alors effectué pour déterminer si une interruption doit être transmise (étape 415). Typiquement, une interruption doit être transmise lorsque l'exécution de l'opération d'entrée/sortie correspondant à la commande reçue est terminée.

Si une interruption doit être transmise, l'identifiant du dispositif duquel a été reçue la commande correspondant à l'interruption à transmettre est obtenu (étape 420), par exemple à partir de la lecture du contexte préalablement mémorisé comprenant cet identifiant. Cet identifiant peut également être reçu avec des données résultant de l'exécution de la commande.

Au cours d'une étape suivante (étape 425), le destinataire de l'interruption est identifié. Comme décrit précédemment en référence à la figure 3, le destinataire est avantageusement identifié à partir d'une table de messages telle qu'une table de messages MSI-X modifiée, à partir d'un numéro de vecteur de l'interruption et d'un identifiant du dispositif duquel a été reçue la commande correspondant à l'interruption à transmettre.

L'interruption est alors transmise au dispositif dont l'identifiant a été obtenu (étape 430).

Naturellement, plusieurs opérations d'entrée/sortie et plusieurs transmissions d'interruptions peuvent être traitées en parallèle.

La figure 5 illustre schématiquement un exemple d'architecture d'un contrôleur de périphériques autonome adapté à mettre en oeuvre un mode de réalisation de l'invention, notamment l'algorithme décrit en référence à la figure 4.

Comme illustré, le contrôleur de périphériques autonome 120 comprend ici un microcontrôleur 500 (ou CPU). Celui-ci est ici relié à :
- une première mémoire 505, par exemple une mémoire de type RAM, comportant des registres adaptés à enregistrer des variables et paramètres créés et modifiés au cours de l'exécution de programmes ;
- une seconde mémoire 510, par exemple une mémoire de type EEPROM (acronyme d'*Electrically-Erasable Programmable Read Only Memory* en terminologie anglo-saxonne), adaptée par exemple à stocker des programmes mettant en oeuvre l'algorithme décrit en référence à la figure 4 ;
- une interface de communication 515 connectée à plusieurs processeurs, adaptée à recevoir des commandes d'opérations d'entrée/sortie et à transmettre des interruptions ; et
- une interface de communication 520 connectée à des périphériques et permettant de transmettre ou recevoir des données de périphériques.

Le microcontrôleur 500 commande et dirige l'exécution des instructions ou portions de code logiciel du ou des programmes.

Naturellement, pour satisfaire des besoins spécifiques, une personne compétente dans le domaine de l'invention pourra appliquer des modifications dans la description précédente. La présente invention ne se limite pas aux formes de réalisation décrites, d'autres variantes et combinaisons de caractéristiques sont possibles.

La présente invention a été décrite et illustrée dans la présente description détaillée en référence aux figures jointes. Toutefois, la présente invention ne se limite pas aux formes de réalisation présentées. D'autres variantes et modes de réalisation peuvent être déduits et mis en oeuvre par la personne compétente dans le domaine de l'invention à la lecture de la présente description et des figures annexées.

Dans les revendications, le terme « comporter » n'exclut pas d'autres éléments ou d'autres étapes. L'article indéfini « un » n'exclut pas le pluriel. Un seul processeur ou plusieurs autres unités peuvent être utilisées pour mettre en oeuvre l'invention. Les différentes caractéristiques présentées et/ou revendiquées peuvent être avantageusement combinées. Leur présence dans la description ou dans des revendications dépendantes différentes n'exclut pas, en effet, la possibilité de les combiner. Les signes de référence ne sauraient être compris comme limitant la portée de l'invention.

## Revendications

1. Procédé de traitement d'interruptions dans un contrôleur de périphériques autonome pour système informatique multiprocesseur, ce procédé étant **caractérisé en ce qu'**il comprend les étapes suivantes,
- réception (400) d'une commande pour l'exécution d'une opération d'entrée/sortie et d'un identifiant du dispositif duquel est reçue ladite commande ;
- exécution (410) de ladite opération d'entrée/sortie liée à ladite commande reçue ;
- obtention (420) dudit identifiant du dispositif duquel est reçue ladite commande après l'exécution de ladite opération d'entrée/sortie liée à ladite commande reçue ;
- identification (425) d'un destinataire d'une interruption correspondant à l'exécution de ladite opération d'entrée/sortie liée à ladite commande reçue, ledit destinataire étant identifié en fonction dudit identifiant obtenu du dispositif duquel est reçue ladite commande ; et
- transmission (430) audit destinataire identifié de ladite interruption correspondant à l'exécution de ladite opération d'entrée/sortie liée à ladite commande reçue,
selon lequel ladite étape d'identification d'un destinataire comprend une étape d'accès à une table de messages d'interruptions,
ledit destinataire est identifié en fonction d'un numéro de vecteur d'interruption et ladite table de messages d'interruptions comprend au moins un identifiant de destinataire d'une interruption, ledit au moins un identifiant de destinataire étant associé à un couple comprenant un numéro de vecteur d'interruption et un identifiant d'un dispositif duquel peut être reçue une commande pour l'exécution d'une opération d'entrée/sortie.

2. Procédé selon la revendication 1 comprenant en outre une étape de mémorisation (405) dudit identifiant du dispositif duquel est reçue ladite commande.

3. Procédé selon la revendication 1 ou la revendication 2 comprenant en outre une étape de transmission dudit identifiant du dispositif duquel est reçue ladite commande, ladite étape d'obtention dudit identifiant du dispositif duquel est reçue ladite commande comprenant une étape de réception dudit identifiant transmis.

4. Procédé selon l'une quelconque des revendications 1 à 3 selon lequel ladite table de messages d'interruptions est une table de type MSI-X modifiée.

5. Programme d'ordinateur comprenant des instructions adaptées à la mise en oeuvre de chacune des étapes du procédé selon l'une quelconque des revendications précédentes lorsque ledit programme est exécuté dans un contrôleur de prériphérique autonome selon la revendication 6.

6. Contrôleur de périphériques autonome comprenant des moyens adaptés à la mise en oeuvre de chacune des étapes du procédé selon l'une quelconque des revendications 1 à 4.

7. Système informatique comprenant un contrôleur de périphériques autonome selon la revendication 6, une pluralité de processeurs et une pluralité de périphériques, ledit contrôleur de périphériques autonome permettant à chaque processeur de ladite pluralité de processeurs d'accéder à chaque périphérique de ladite pluralité de périphériques.

## Patentansprüche

1. Verfahren zur Verarbeitung von Unterbrechungen in einer autonomen Peripheriegerätesteuerung für ein Multiprozessor-Computersystem, wobei dieses Verfahren **dadurch gekennzeichnet ist, dass** es die folgenden Schritte umfasst:
- Empfangen (400) eines Befehls zum Durchführen eines Eingabe-/Ausgabevorgangs und einer Kennung der Vorrichtung, von der her der Befehl eingegangen ist;
- Ausführen (410) des mit dem erhaltenen Befehl verbundenen Eingabe-/Ausgabevorgangs;
- Einholen (420) der Kennung der Vorrichtung, von der her der Befehl eingegangen ist, nach dem Ausführen des mit dem erhaltenen Befehl verbundenen Eingabe-/Ausgabevorgangs;
- Identifizieren (425) eines Empfängers einer Unterbrechung, die dem Ausführen des mit dem erhaltenen Befehl verbundenen Eingabe-/Ausgabevorgangs entspricht, wobei der Empfänger in Abhängigkeit von der eingeholten Kennung der Vorrichtung, von der her der Befehl eingegangen ist, identifiziert wird;
- Übertragen (430) an den identifizierten Empfänger der Unterbrechung, die dem Ausführen des mit dem erhaltenen Befehl verbundenen Eingabe-/Ausgabevorgangs entspricht,
gemäß dem der Schritt des Identifizierens eines Empfängers einen Schritt des Zugreifens auf eine Tabelle von Unterbrechungsmeldungen umfasst,
wobei der Empfänger in Abhängigkeit von einer Unterbrechungsvektornummer identifiziert wird, und die Tabelle von Unterbrechungsmeldungen mindestens eine Kennung eines Empfängers einer Unterbrechung umfasst, wobei die mindestens eine Empfängerkennung mit einem Paar verbunden ist, das eine Unterbrechungsvektornummer und eine Kennung der Vorrichtung umfasst, von der her ein Befehl zum Ausführen eines Eingabe-/Ausgabevorgangs empfangen werden kann.

2. Verfahren nach Anspruch 1, darüber hinaus einen Schritt des Speicherns (405) der Kennung der Vorrichtung umfassend, von der her der Befehl eingegangen ist.

3. Verfahren nach Anspruch 1 oder Anspruch 2, darüber hinaus einen Schritt der Übertragung der Kennung der Vorrichtung umfassend, von der her der Befehl eingegangen ist, wobei der Schritt des Einholens der Kennung der Vorrichtung, von der her der Befehl eingegangen ist, einen Schritt des Empfangens der übertragenen Kennung umfasst.

4. Verfahren nach einem der Ansprüche 1 bis 3, gemäß dem die Tabelle von Unterbrechungsmeldungen eine modifizierte Tabelle des Typs MSI-X ist.

5. Computerprogramm, Anweisungen umfassend, die zur Umsetzung jedes der Schritte des Verfahren nach einem der vorhergehenden Ansprüche angepasst sind, wenn das Programm in einer autonomen Peripheriegerätesteuerung nach Anspruch 6 abläuft.

6. Autonome Peripheriegerätesteuerung, Einrichtungen umfassend, die zur Umsetzung jedes der Schritte des Verfahren nach einem der Ansprüche 1 bis 4 angepasst sind.

7. Computersystem, umfassend eine autonome Peripheriegerätesteuerung nach Anspruch 6, mehrere Prozessoren und mehrere Peripheriegeräte, wobei die autonome Peripheriegerätesteuerung jeden Prozessor der mehreren Prozessoren auf jedes Peripheriegerät der mehreren Peripheriegeräte zugreifen lässt.

## Claims

1. Method for processing interrupts in an autonomous peripheral controller for a multiprocessor computer system, said method being **characterized in that** it comprises the following steps:
- receiving (400) a command to execute an input/output operation and an identifier of the device from which said command is received;
- executing (410) said input/output operation linked to said received command;
- obtaining (420) said identifier of the device from which said command is received, following execution of said input/output operation linked to said received command;
- identifying (425) a recipient of an interrupt corresponding to the execution of said input/output operation linked to said received command, said recipient being identified as a function of said obtained identifier of the device from which said command is received; and
- transmitting (430) to said identified recipient said interrupt corresponding to the execution of said input/output operation linked to said received command,
in which said step of identifying a recipient comprises a step of accessing an interrupt message table,
said recipient is identified as a function of an interrupt vector number, and
said interrupt message table comprises at least one identifier of a recipient of an interrupt, said at least one recipient identifier being associated with a pair comprising an interrupt vector number and an identifier of a device from which a command to execute an input/output operation can be received.

2. Method according to claim 1, additionally comprising a step of storing (405) said identifier of the device from which said command is received.

3. Method according to claim 1 or claim 2, additionally comprising a step of transmitting said identifier of the device from which said command is received, said step of obtaining said identifier of the device from which said command is received comprising a step of receiving said transmitted identifier.

4. Method according to any one of claims 1 to 3, in which said interrupt message table is a modified MSI-X table.

5. Computer program comprising instructions suitable for implementing each of the steps of the method according to any one of the preceding claims when said program is executed in an autonomous peripheral controller according to claim 6.

6. Autonomous peripheral controller comprising means suitable for implementing each of the steps of the method according to any one of claims 1 to 4.

7. Computer system comprising an autonomous peripheral controller according to claim 6, a plurality of processors and a plurality of peripherals, said autonomous peripheral controller enabling each processor of said plurality of processors to access each peripheral of said plurality of peripherals.
